## Europäisches Patentamt
## European Patent Office
## Office européen des brevets

(19)

(11) Numéro de publication: **0 112 762**
**B1**

(12)

# FASCICULE DE BREVET EUROPÉEN

(45) Date de publication du fascicule du brevet:
**08.03.89**

(51) Int. Cl.⁴: **G 01 N 21/63**, B 23 K 26/00

(21) Numéro de dépôt: **83402391.3**

(22) Date de dépôt: **12.12.83**

(54) Procédé et dispositif de contrôle en ligne de la profondeur d'une soudure par un faisceau d'impulsions.

(30) Priorité: **17.12.82 FR 8221206**

(43) Date de publication de la demande:
**04.07.84 Bulletin 84/27**

(45) Mention de la délivrance du brevet:
**08.03.89 Bulletin 89/10**

(84) Etats contractants désignés:
**BE DE GB NL**

(56) Documents cité:
**FR-A-2 076 185**

**LASER FOCUS, vol. 17, no. 4, avril 1981, pages 30-34, Newton, Massachusetts, US; "Laser assesses weld composition to evaluate condition of reactors"**
**IBM TECHNICAL DISCLOSURE BULLETIN, vol. 24, no. 9, février 1982, pages 4691-4693, New York, US; H.E. KLAUSNER: "Closed-loop laser control system"**
**LASER FOCUS, vol. 12, no. 3, mars 1976, pages 33-36, Newton, Massachusetts, US; J.-P. AESCHLIMANN et al.: "Automated welding of minute parts"**
**FEINWERKTECHNIK, vol. 74, no. 4, 1970, pages 155-162; F. FRÜNGEL et al.: "Bearbeitung von Kleinbauteilen der Feinwerktechnik mit Impulslaser-Schweissge räten"**

(73) Titulaire: **COMMISSARIAT A L'ENERGIE ATOMIQUE, 31/33, rue de la Fédération, F-75015 Paris (FR)**

(72) Inventeur: **Bachet, Bernard, 30, rue Désire Nisard, F-21160 Marsannay la Cote (FR)**
Inventeur: **Daguet, Jean, 6, rue Ph. Rouvres, F-21000 Dijon (FR)**
Inventeur: **Dujardin, Louis, 8, Boulevard des Aiguillottes, F-21121 Fontaine Les Dijon (FR)**

(74) Mandataire: **Mongrédien, André, c/o BREVATOME 25, rue de Ponthieu, F-75008 Paris (FR)**

EP 0 112 762 B1

## Description

La présente invention a pour objet un procédé et un dispositif de contrôle en ligne de la profondeur d'une soudure par un faisceau d'impulsions. Par contrôle en ligne, on entend que le contrôle s'effectue en même temps que l'opération de soudage. Elle trouve notamment son application dans le contrôle de soudure de faible épaisseur.

L'homme de l'art connaît de nombreuses methodes de contrôle de la profondeur d'une soudure. Les méthodes les plus courantes reposent sur des techniques telles que les ultrasons, les courants de Foucault, la potentiométrie et la spectrométrie d'absorption.

Dans la méthode par ultrasons, il est nécessaire d'utiliser une fréquence telle que la propagation des ultrasons, sans perte exagérée, nécessite l'utilisation d'un fluide dit "fluide de couplage". La méthode par ultrasons ne peut donc pas être utilisée dans le cas d'un contrôle en ligne car le fluide de couplage nécessaire à la méthode est détruit par le faisceau de soudage.

La méthode par courants de Foucault et la méthode potentiométrique de contrôle de l'épaisseur d'une soudure ont des désavantages communs. Ces deux méthodes nécessitent d'approcher près du point de soudure des sondes, dans le cas de la méthode de Foucault, ou des électrodes, dans le cas de la méthode potentiométrique. Le positionnement précis de ces capteurs est difficile à réaliser et peut d'autre part perturber la soudure.

La méthode de contrôle de la profondeur d'une soudure par d'une raie fonctionne de la façon suivantes (voir FR-A-2 076 185): dans une enceinte de soudage où se trouve la pièce à souder et le faisceau de soudage, on place une source de rayonnement monochromatique et on dirige ce rayonnement monochromatique vers le plasma de soudure. Cette source monochromatique est généralement une lampe à cathode creuse. Une fraction du rayonnement émis est absorbée par des particules présentes dans le plasma de soudure, particules qui sont apportées sur la pièce à souder (méthode par traceur) ou qui sont présentes dans la pièce à souder à l'état d'impuretés (méthode par autotraceur) et qui sont libérées dans le plasma de soudure par le faisceau de soudage. Le nombre de particules libérées, et donc la fraction du rayonnement monochromatique absorbé est proportionnel à la profondeur de la soudure. Par comparaison entre le niveau du signal recueilli et le niveau d'un signal de référence, la profondeur de la soudure est alors évaluée.

La source de rayonnement monochromatique ne peut être utilisée en continu. En effet, dans ce cas, le signal recueilli dans le moyen optique est constitué de la fraction non absorbée du rayonnement monochromatique auquel se superpose un rayonnement d'émission du au plasma de soudure. Or, l'émission du plasma de soudure est d'un niveau très supérieur à l'émission du rayonnement monochromatique. Le signal utile disparaît donc dans un bruit de fond et ne peut pas être exploité.

Pour remédier à cela, il est nécessaire de découper le signal monochromatique en un faisceau d'impulsions et de procéder à une détection synchrone. Dans le cas du soudage par un faisceau continu, tel qu'un faisceau d'électrons, la fréquence du signal monochromatique est par exemple de 500 Hz. Dans le cas du soudage par un faisceau d'impulsions, c'est au niveau de chaque impulsion de soudage que la source monochromatique devra émettre un grand nombre d'impulsions. Pour un faisceau d'impulsions de soudage tel qu'un faisceau laser, délivrant par exemple des impulsions de durée 4 ms toutes les 100 ms, la fréquence des impulsions de la source monochromatique devra être de l'ordre de quelques kilohertz de manière à ce que pendant chaque impulsion du faisceau de soudage, la source monochromatique émette une centaine d'impulsions. L'homme de l'art ne dispose pas de moyens simples permettant de mettre en oeuvre facilement un tel faisceau monochromatique d'impulsions.

Aucune méthode de contrôle connue ne permet donc d'effectuer un contrôle en ligne de la profondeur d'une soudure par un faisceau d'impulsions qui soit simple, fiable et précis. Le but de l'invention est précisément de fournir un procédé et un dispositif permettant d'effectuer un tel contrôle.

De manière plus précise, l'invention a pour objet un procédé de contrôle en ligne de la profondeur d'une soudure effectuée par un faisceau d'impulsions dans lequel le faisceau d'impulsions crée autour de son point d'impact sur la pièce à souder un plasma de soudure qui se caractérise en ce qu'on recueille à chaque impulsion du faisceau de soudage, au moins une raie d'émission du plasma de soudure dans un moyen optique, en ce qu'on convertit l'énergie de ces raies en signaux électriques analogiques, en ce qu'on effectue un traitement numérique de ces signaux, en ce qu'on compare les signaux résultant du traitement numérique à des signaux de référence.

Selon une caractéristique secondaire, on commande en outre par une boucle de régulation la puissance du faisceau d'impulsions de soudage en ligne par un signal dépendant de la différence entre le niveau des signaux résultant du traitement numérique et le niveau des signaux de référence.

Cette boucle de régulation permet de réaliser une soudure de profondeur constante.

L'invention a également pour objet un dispositif de contrôle en ligne de la profondeur d'une soudure par un faisceau d'impulsions dans lequel la pièce à souder et le moyen de soudage délivrant un faisceau d'impulsions sont contenus dans une enceinte de soudage qui se caractérise en ce qu'il comprend au moins une voie de mesure, chacune constituée d'un moyen optique de collection du rayonnement émis par le plasma de soudure, ce moyen optique étant situé dans l'enceinte de soudage, d'un monochromateur relié au moyen optique par un moyen de transmission, d'un photomultiplicateur relié au monochromateur et comprenant outre cette voie de mesure, un moyen de traitement des signaux électriques issus des photomultiplicateurs et, un moyen de visualisation des signaux issus du moyen de traitement et un moyen de comparaison de ces signaux avec des signaux de référence.

Selon une caractéristique secondaire, le dispositif comprend une boucle de régulation en ligne utilisant un signal, délivré par une sortie du moyen de comparaison commandant l'intensité du faisceau d'impulsions de soudage.

Selon une autre caractéristique secondaire, le dispositif se caractérise en ce que chaque moyen optique reçoit l'extrémité d'une fibre optique.

L'utilisation de l'extrémité d'une fibre optique comme moyen de réception du rayonnement émis par le plasma permet de limiter l'encombrement dans l'enceinte de soudage.

Selon une autre caractéristique secondaire, le dispositif se caractérise en ce que chaque moyen optique comprend des lentilles optiques et des miroirs.

Un moyen optique comprenant des lentilles et des miroirs est plus facile à utiliser qu'un moyen optique comprenant l'extrémité d'une fibre optique, mais il est plus volumineux.

Selon une autre caractéristique, le dispositif se caractérise en ce que chaque moyen optique comprend en outre un collimateur, cela permet d'améliorer la sensibilité du moyen optique.

Selon une autre caractéristique, le dispositif dans lequel les voies de mesure sont appariées, comprend un moyen de réglage permettant d'égaliser le rendement optoélectronique des voies de mesure d'une même paire.

Le fait d'égaliser le rendement optoélectronique de deux voies de mesure autorise à comparer les signaux reçus par chacune des voies, et à faire des corrélations sur les signaux, ce qui améliore la qualité de l'information contenue dans les signaux recueillis.

Selon un mode particulier de réalisation, le dispositif se caractérise en ce que le moyen de réglage est constitué d'une source de rayonnement émettant un même rayonnement dans chacune des voies de mesure d'une même paire.

Cette source peut être quelconque, pourvu qu'elle émette un rayonnement d'intensité suffisante pour que le moyen de traitement reçoive un signal de niveau exploitable.

Selon une caractéristique secondaire, le dispositif se caractérise en ce que le moyen de traitement comprend un moyen de normalisation des signaux reçus des voies de mesure, un enregistreur permettant un traitement différé de ces signaux, un filtre passe-bande, un filtre temporel, un convertisseur analogique-numérique et une unité de calcul.

D'autres caractéristiques et avantages de l'invention ressortiront mieux de la description qui va suivre, donnée à titre illustratif mais non limitatif, en référence aux figures annexées dans lesquelles:

- la figure 1 représente un premier mode de réalisation du dispositif comprenant une seule voie de mesure,
- la figure 2 représente un autre mode de réalisation du dispositif comprenant deux voies de mesure et une boucle de contrôle,
- la figure 3 représente un autre mode de réalisation du dispositif comprenant quatre voies de mesure et une boucle de contrôle,
- la figure 4 représente un synoptique du moyen de traitement.

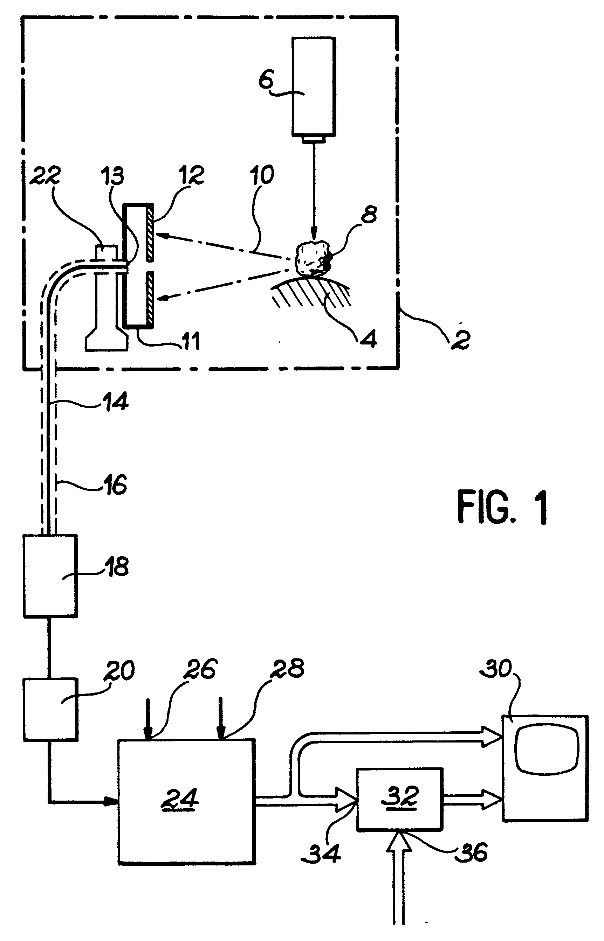

Sur la figure 1, on a représenté un mode de réalisation du dispositif de contrôle comprenant une voie de mesure. Dans une enceinte de soudage 2, se trouve la pièce à souder 4 et le moyen de soudage 6 délivrant un faisceau d'impulsions créant autour de son point d'impact sur la pièce à souder 4 un plasma de soudure 8. Le rayonnement 10 émis par ce plasma de soudure 8 est capté, puis transformé en un signal électrique par une voie de mesure comprenant un moyen optique 11 de collection du rayonnement 10 émis par le plasma de soudure 8, un moyen de transmission 14 acheminant le rayonnement lumineux capté hors de l'enceinte de soudage 2 vers les autres éléments de la voie de mesure, un monochromateur 18 et un photomultiplicateur 20.

Le moyen optique 11 de collection du faisceau lumineux 10 issu du plasma de soudure 8 comprend un collimateur 12 permettant de ne recueillir qu'une partie du faisceau issu du plasma de soudure 8. Ceci permet une meilleure sensibilité. En effet, deux plasmas de soudure de même volume, l'un profond et étroit, l'autre peu profond et large émettent un rayonnement de même intensité. L'utilisation d'un collimateur tel que 12 permet de recueillir l'émission d'une surface donnée de plasma et donc de discriminer deux plasmas, l'un profond et l'autre peu profond, l'énergie recueillie étant plus intense dans le premier cas que dans le second. Le moyen optique 11 comprend en outre un moyen permettant de diriger le faisceau ayant traversé le collimateur 12 vers l'entrée du moyen de transmission 14. Dans le cas de la figure, où le moyen de transmission 14 est constitué d'une fibre optique, ce moyen est constitué par l'extrémité 13 de cette fibre optique. Pour que le signal transmis par la fibre optique 14 protégée par la gaine 16 puisse être comparé à un signal de référence, il faut que les conditions opératoires dans lesquelles ce signal a été recueilli soient les mêmes que celles dans lesquelles le signal de référence a été recueilli. Il faut donc assurer dans les deux cas un même rendement du moyen optique 12 de collection du rayonnement 10. Cela impose notamment que l'extrémité 13 de la fibre optique 14 soit exactement dans la même position dans les deux cas. Ceci peut être assuré par un support 22. Si l'on n'est pas sûr que la position de l'extrémité 13 de la fibre optique 14 soit la même lors de la saisie du signal de référence et lors de la saisie du signal on peut remplacer cette extrémité 13 par des moyens optiques classiques tels que des miroirs et des lentilles, mais le rendement optique du moyen optique 12 sera dans ce cas un peu moins avantageux.

Le monochromateur 18 situé à l'extrémité du moyen de transmission 14 permet de sélectionner une des raies du spectre de l'émission du plasma de soudure 8. Cette raie est choisie de manière préférentielle parmi les raies de forte intensité et parmi les raies d'émission des constituants majeurs de la pièce à souder 4. Si l'intensité des raies des constituants majeurs de la pièce à souder 4 sature les moyens de mesure, on pourra utiliser les raies d'autres constituants de la pièce à souder 4. Par exemple, si cette pièce à souder 4 est en acier, la raie sélectionnée par le monochromateur 18 pourra être une des raies du fer, du nickel ou du chrome. Le signal monochromatique issu du monochromateur 18 est ensuite appliqué à un photomultiplicateur 20 qui l'amplifie et le convertit en un signal électrique.

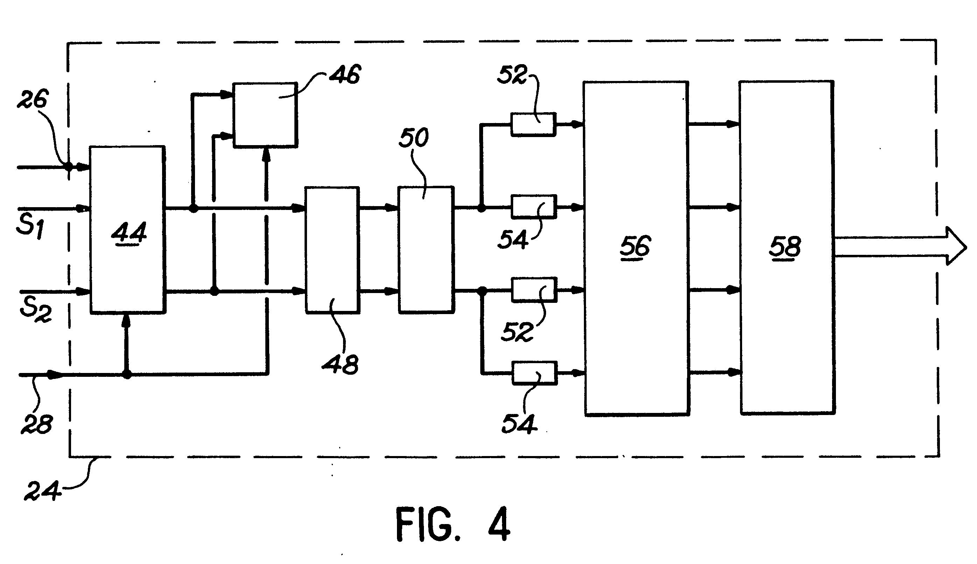

Ce signal électrique est ensuite appliqué à l'entrée du moyen de traitement 24 qui reçoit en outre sur son entrée 26 un signal dont l'intensité est proportionnelle à la puissance du faisceau d'impulsions et un autre signal sur son entrée 28, actif sur le front montant de chaque impulsions de soudage. Le signal appliqué sur l'entrée 26 pourra par exemple provenir de l'alimentation du moyen de soudage 6 ou d'une fraction du faisceau de soudage détourné par un moyen adéquat. Le signal appliqué sur l'entrée 28 est utilisé comme signal de synchronisation pour le traitement du signal issu de la voie de mesure. Le moyen de traitement 24 effectue différentes opérations sur le signal reçu du photomultiplicateur 20, opérations qui seront précisées lors de la description de la figure 4, et il délivre en sortie un ou plusieurs signaux qui peuvent être soit directement envoyés à un moyen de visualisation 30, constitué de manière connue par un écran de visualisation, une table traçante, etc... soit vers un moyen de comparaison 32. Ce moyen de comparaison 28 reçoit donc sur l'une de ses entrées 34 le ou les signaux issus du moyen de traitement 24 et sur d'autres entrées 36 le ou les signaux de référence. De la comparaison de ces différents signaux, le moyen de comparaison 28 déduit la profondeur de la soudure réalisée. Le résultat peut être envoyé vers le moyen de visualisation 30.

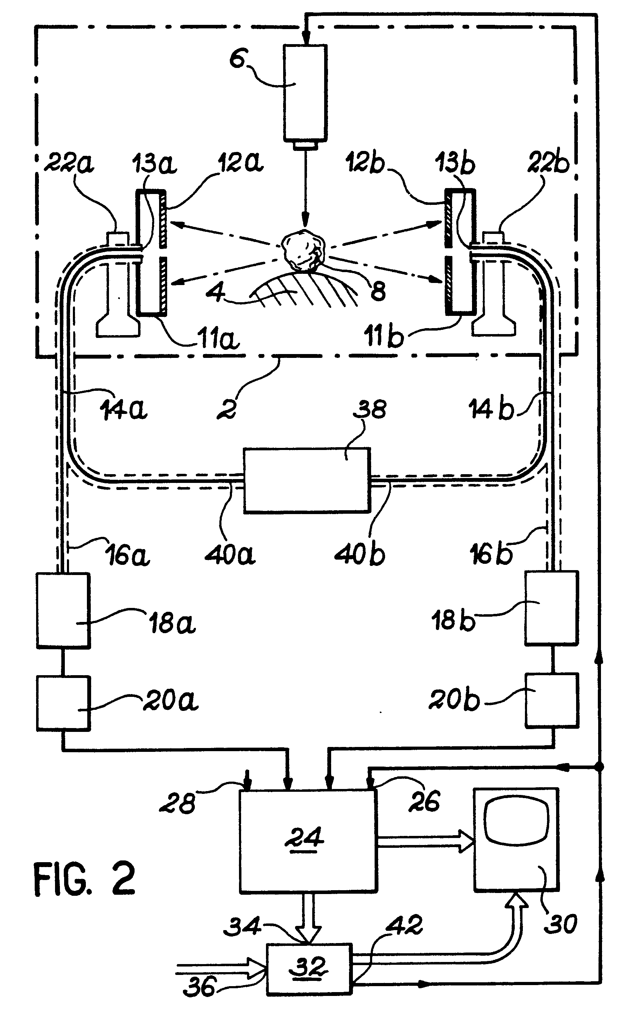

Sur la figure 2, on a représenté un autre mode de réalisation du dispositif selon l'invention. Nous ne reprendrons pas en détail les éléments de cette figure déjà présents sur la figure précédente. Ce dispositif a, par rapport à celui de la figure précédente, deux différences importantes. Il est muni de deux voies de mesure et le moyen de comparaison 28 délivre en ligne un signal permettant de régler la puissance du moyen de soudage 6. L'utilisation de deux voies de mesure au lieu d'une permet de sélectionner deux raies du plasma de soudure 8 et donc d'obtenir une information de meilleure qualité. En effet, il est dès lors possible d'effectuer une corrélation entre les informations recueillies par chacune des voies de mesure. Pour que les signaux recueillis par chaque voie de mesure puissent être comparés dans le moyen de traitement 24, il est nécessaire que les deux voies de mesure aient un même rendement optoélectronique. Ceci sera mesuré et éventuellement corrigé par un moyen de réglage 38.

Le procédé opératoire de ce moyen de réglage 38 est le suivant le moyen de réglage 38 émet un rayonnement lumineux de forte puissance, par exemple produit par une lampe à xénon, dans chacune des fibres optiques 40a et 40b. Le faisceau transmis par la fibre 40a chemine dans la gaine 16a jusqu'à son extrémité 13a. Elle franchit ensuite le collimateur 12a, puis le collimateur 12b et pénètre dans la fibre 14b par l'extrémité 13b de la gaine 16b. Ce signal traverse ensuite le monochromateur 18b, puis le photomultiplicateur d'autres entrées 36 le ou les signaux de référence. De la comparaison de ces différents signaux, le moyen de comparaison 28 déduit la profondeur de la soudure réalisée. Le résultat peut être envoyé vers le moyen de visualisation 30.

Sur la figure 2, on a représenté un autre mode de réalisation du dispositif selon l'invention. Nous ne reprendrons pas en détail les éléments de cette figure déjà présents sur la figure précédente. Ce dispositif a, par rapport à celui de la figure précédente, deux différences importantes. Il est muni de deux voies de mesure et le moyen de comparaison 28 délivre en ligne un signal permettant de régler la puissance du moyen de soudage 6. L'utilisation de deux voies de mesure au lieu d'une permet de sélectionner deux raies du plasma de soudure 8 et donc d'obtenir une information de meilleure qualité. En effet, il est dès lors possible d'effectuer une corrélation entre les informations recueillies par chacune des voies de mesure. Pour que les signaux recueillis par chaque voie de mesure puissent être comparés dans le moyen de traitement 24, il est nécessaire que les deux voies de mesure aient un même rendement optoélectronique. Ceci sera mesuré et éventuellement corrigé par un moyen de réglage 38.

Le procédé opératoire de ce moyen de réglage 38 est le suivant le moyen de réglage 38 émet un rayonnement lumineux de forte puissance, par exemple produit par une lampe à xénon, dans chacune des fibres optiques 40a et 40b. Le faisceau transmis par la fibre 40a chemine dans la gaine 16a jusqu'à son extrémité 13a. Elle franchit ensuite le collimateur 12a, puis le collimateur 12b et pénètre dans la fibre 14b par l'extrémité 13b de la gaine 16b. Ce signal traverse ensuite le monochromateur 18b, puis le photomultiplicateur 20b est appliqué sur l'une des entrées du moyen de traitement 24. De la même manière, le signal lumineux cheminant à travers la fibre 32b se retrouve dans la fibre 14a et après avoir franchi le monochromateur 18a et le photomultiplicateur 20a, se retrouve appliqué sur l'une des entrées du moyen de traitement 24. Le niveau de ces deux signaux appliquée au moyen de traitement 24 ou leur différence est ensuite signifié à l'utilisateur par exemple sur le moyen de visualisation 30. L'utilisateur règle alors le gain des monochromateurs ou des photomultiplicateurs ou la position de l'extrémité 13a ou 13b des fibres optiques, de manière à ce que les deux signaux reçus par le moyen de traitement 24 soient de même niveau d'intensité. Le rendement optoélectronique de chacune des voies de mesure étant égal, le moyen de réglage 38 est arrêté et le soudage peut commencer.

Comme dans le mode de réalisation de la figure précédente, le signal monochromatique délivré par chaque voie de mesure est appliqué sur l'une des entrées du moyen de traitement 24 qui reçoit en outre un signal appliqué sur son entrée 26 proportionnel à la puissance du faisceau d'impulsions du moyen de soudage 6 et un autre signal appliqué sur son entrée 28 qui est activée sur le front montant de chacune des impulsions du faisceau d'impulsions du moyen de soudage 6.

Le moyen de traitement 24 effectue sur ces signaux différentes opérations qui seront décrites plus en détail lors de la description de la figure 4. Le moyen de visualisation 30 est identique à celui du mode de réalisation précédent. Le moyen de comparaison 32 reçoit comme dans le mode de réalisation de la figure précédente, sur son entrée 34 un ou plusieurs signaux issus du moyen de traitement 24 d'une part, et sur son entrée 36, un ou plusieurs signaux de référence d'autre part et délivre en sortie des signaux envoyés vers le moyen de visualisation 30. Il délivre en outre sur une sortie 42 un signal, dépendant du résultat de la comparaison effectuée sur les signaux reçus sur chacune de ses entrées, commandant la puissance du faisceau d'impulsions du moyen de soudage 6. Ce signal constitue une boucle de retour et permet de modifier en ligne la puissance du faisceau d'impulsions du moyen de soudage 6.

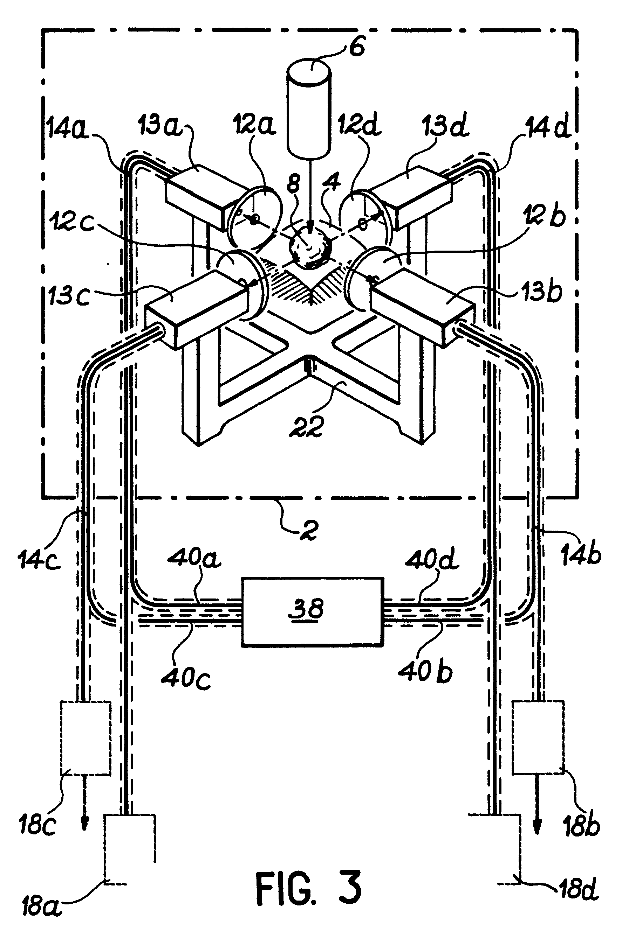

La figure 3 représente un mode de réalisation particulier du dispositif comprenant quatre voies de mesure. L'augmentation du nombre de voies de mesure permet d'avoir une meilleure qualité de l'information captée. Cependant, il est évident que le coût du dispositif et l'encombrement dans l'enceinte de soudage 2 croîent avec le nombre de voies de mesure. Le choix du nombre de voies de mesure sera donc affaire de compromis et dépendra des critères que l'on se donne. Il n'est pas possible de régler le rendement des voies de mesure de manière à ce qu'il soit identiques pour toutes les quatre. En effet, il faudrait alors que chacun des moyens optiques 11 de collection des rayonnements lumineux ait pour vis-à-vis tous les autres moyens optiques de collection de rayons lumineux. Les voies de mesure sont donc simplement appariées. Dans le montage représenté sur la figure 3, il est possible de régler à un même niveau le rendement optoélectronique des voies de mesure A et B d'une part, et celui des voies de mesure C et D d'autre part. On peut envisager d'utiliser un moyen de réglage tel que le moyen de réglage 38 pour chaque paire de voies de mesure. Il est cependant moins coûteux de n'utiliser qu'un seul moyen de réglage 38 pour deux paires de voies de mesure ou de manière générale pour N paires de voies de mesure. Cela peut se faire, comme il est représenté sur la figure, en connectant les fibres optiques 40a et 40c au même moyen de réglage 38 et en procédant de même pour les fibres optiques 40b et 40d. Il est évident que ce montage est plus simple que le montage nécessitant autant de moyens de réglage 38 que de paires de voies de mesure, mais qu'il est plus difficile à mettre en oeuvre parce qu'il faut s'assurer que deux voies appariées telles que 40a et 40b reçoivent la même intensité lumineuse du moyen de réglage 38.

La figure 4 représente un tableau synoptique du moyen de traitement 24. Ce moyen de traitement correspond à un dispositif ayant deux voies de mesure. Le moyen de traitement 24 reçoit sur deux entrées les signaux $S_1$ et $S_2$ issus des voies de mesure. Il reçoit également sur son entrée 26 un signal proportionnel à la puissance du faisceau d'impulsions du moyen de soudage 6. Il reçoit en outre sur son entrée 28 un signal actif sur le front montant de chaque impulsion du moyen de soudage 6. Ce dernier signal agit comme un signal de synchronisation. Les trois premiers signaux sont appliqués sur les entrées d'un circuit de normalisation 44. Ces trois signaux peuvent ensuite être dirigés vers un enregistreur 46 pour permettre un traitement différé. Ils sont alors mémorisés en parallèle, par exemple sur une bande magnétique. Si on désire effectuer un contrôle en ligne, les signaux issus du circuit 44 sont appliqués sur les entrées d'un circuit de filtrage 48 constitué d'un filtre passe-bande ajustable. Les signaux issus de ce filtre 48 sont ensuite appliqués sur les deux entrées d'un circuit 50. Ce circuit est une fenêtre temporelle qui permet de ne prélever qu'une partie des signaux présents pendant la durée des impulsions du faisceau d'impulsions du moyen de soudage 6. De manière plus précise, si $t_1$ et $t_2$ sont les dates de début et de fin d'une impulsion du faisceau d'impulsions de soudage, la fenêtre temporel le permet de laisser passer les signaux appliqués en entrée du circuit 50 entre les dates $t_3$ et $t_4$, vérifiant $t_1 \leqslant t_3 < t_4 \leqslant t_2$, les valeurs de $t_3$ et $t_4$ étant ajustables. A la sortie du circuit 50, les valeurs crêtes et intégrales de chacun des signaux sont détectées respectivement par les circuits 52 et les circuits 54. Les quatre valeurs obtenues sont ensuite appliquées à l'entrée d'un convertisseur analogique-numérique 56. Ainsi numérisées, il est possible d'effectuer sur ces valeurs différents traitements tels que moyenne glissante, c'est-à-dire moyenne sur les N dernières valeurs d'un signal, somme de signaux, rapport de deux signaux, etc... Ces traitements sont effectués par l'unité de calcul 58 qui délivre en sortie un ou plusieurs signaux qui permettront par comparaison avec les signaux de référence, de déterminer la profondeur de la soudure.

**Revendications**

1. Procédé de contrôle en ligne de la profondeur d'une soudure effectuée par un faisceau d'impulsions dans lequel le faisceau d'impulsions crée autour de son point d'impact sur la pièce à souder (4) un plasma de soudure (8), caractérisé en ce qu'on recueille à chaque impulsion du faisceau de soudage, au moins une raie d'émission du plasma de soudure (8) dans un moyen optique (11), en ce qu'on convertit l'énergie de ces raies en signaux électriques analogiques, en ce qu'on effectue un traitement numérique de ces signaux, en ce qu'on compare les signaux résultant du traitement numérique à des signaux de référence.

2. Procédé selon la revendication 1, caractérisé en ce qu'on commande en outre par une boucle de régulation la puissance du faisceau d'impulsions de soudage en ligne par un signal dépendant de la différence entre le niveau des signaux résultant du traitement numérique et le niveau des signaux de référence.

3. Dispositif de contrôle en ligne de la profondeur d'une soudure par un faisceau d'impulsions dans lequel la pièce à souder (4) et le moyen de soudage (6) délivrant un faisceau d'impulsions sont contenus dans une enceinte de soudage (2), caractérisé en ce qu'il comprend au moins une voie de mesure, chacune constituée d'un moyen optique (11) de collection du rayonnement émis par le plasma de soudure (8), ce moyen optique (11) étant situé dans l'enceinte de soudage (2), d'un monochromateur (18) relié au moyen optique (11) par un moyen de transmission (14), d'un photomultiplicateur (20) relié au monochromateur (18) et comprenant outre cette voie de mesure, un moyen de traitement (24) des signaux électriques issus des photomultiplicateurs (20), un moyen de visualisation (30) des signaux issus du moyen de traitement (24) et un moyen de comparaison (32) de ces signaux avec des signaux de référence.

4. Dispositif selon la revendication 3, caractérisé en ce qu'il comprend une boucle de régulation en ligne constituée d'un signal, délivré par une sortie (42) du moyen de comparaison (32), commandant l'intensité du faisceau d'impulsions de soudage.

5. Dispositif selon l'une quelconque des revendications 3 et 4, caractérisé en ce que chaque moyen optique (11) reçoit l'extrémité d'une fibre optique (13).

6. Dispositif selon l'une quelconque des revendications 3 et 4, caractérisé en ce que chaque moyen optique (11) comprend des lentilles optiques et des miroirs.

7. Dispositif selon l'une quelconque des revendications 5 et 6, caractérisé en ce que chaque moyen optique (11) comprend en outre un collimateur (12).

8. Dispositif selon l'une quelconque des revendications 3 à 7, dans lequel les voies de mesure sont appariées, caractérisé en ce qu'il comprend un moyen de réglage (38) permettant d'égaliser le rendement optoélectronique des voies de mesure d'une même paire.

9. Dispositif selon la revendication 8, caractérisé en ce que le moyen de réglage (38) est constitué d'une source de rayonnement émettant un même rayonnement dans chacune des voies de mesure d'une même paire.

10. Dispositif selon l'une quelconque des revendications 3 à 9, caractérisé en ce que le moyen de traitement (24) comprend un moyen de normalisation (44) des signaux reçus des voies de mesure, un enregistreur (46) permettant un traitement différé de ces signaux, un filtre passe-bande (48), un filtre temporel (50), un convertisseur analogique-numérique (56) et une unité de calcul (58).

**Patentansprüche**

1. Verfahren zur laufenden Kontrolle der Tiefe einer mit einem Impulsbündel durchgeführten Schweißung, bei dem das Impulsbündel um seinen Auftreffpunkt herum auf dem zu schweißenden Teil (4) ein Schweißplasma (8) erzeugt,
dadurch gekennzeichnet,
daß man bei jedem Impuls des Schweißbündels wenigstens einen Emissionsstrahl des Schweißplasmas (8) in einer optischen Einrichtung (11) auf fängt, daß man die Energie dieser Strahlen in elektrische Analogsignale umwandelt, daß man eine rechnerische Behandlung dieser Signale durchführt, daß man die sich aus der rechnerischen Behandlung ergebenden Signale mit Bezugssignalen vergleicht.

2. Verfahren nach Anspruch 1,
dadurch gekennzeichnet,
daß man ferner über eine Regelschleife laufend die Stärke des Impulsschweißbündels durch ein Signal steuert, welches von dem Unterschied zwischen dem Pegel der sich aus der rechnerischen Behandlung ergebenden Signale und dem Pegel der Bezugssignale abhängt.

3. Vorrichtung zur laufenden Kontrolle der Tiefe einer Schweißung durch ein Impulsbündel, bei der der zu schveißende Teil (4) und die Schweißeinrichtung (6), die ein Impulsbündel abgibt, in einer Schweißkammer (2) enthalten sind,

dadurch gekennzeichnet,

daß sie wenigstens eine Meßstrecke umfaßt, von denen jede gebildet ist von einer optischen Sammeleinrichtung (11) für die von dem Schweißplasma (8) ausgesandte Strahlung, wobei sich diese optische Einrichtung (11) in der Schweißkammer (2) befindet, von einem Monochromator (18), der durch eine Übertragungseinrichtung (14) mit der optischen Einrichtung (11) verbunden ist, von einem Fotoelektronenvervielfacher (20), der mit dem Monochromator (18) verbunden ist, und daß jene außer dieser Meßstrecke eine Verarbeitungseinrichtung (24) für die von dem Fotoelektronenvervielfacher (20) abgegebenen, elektrischen Signale, eine Sichteinrichtung (30) für die von der Verarbeitungseinrichtung (24) abgegebenen Signale und eine Vergleichseinrichtung (32) fur diese Signale mit den Bezugssignalen umfaßt.

4. Vorrichtung nach Anspruch 3,

dadurch gekennzeichnet,

daß sie eine on-line Regelschleife umfaßt, die von einem Signal gebildet ist, welches von einem Ausgang (42) der Vergleichseinrichtung (32) abgegeben wird und die Intensität des Schweißimpulsbündels steuert.

5. Vorrichtung nach irgendeinem der Ansprüche 3 oder 4,

dadurch gekennzeichnet,

daß jede optische Einrichtung (11) das Ende einer optischen Faser (13) erhält.

6. Vorrichtung nach irgendeinem der Ansprüche 3 oder 4,

dadurch gekennzeichnet,

daß jede optische Einrichtung (11) optische Linsen und Spiegel umfaßt.

7. Vorrichtung nach irgendeinem der Ansprüche 5 oder 6,

dadurch gekennzeichnet,

daß jede optische Einrichtung (11) ferner einen Kollimator (12) umfaßt.

8. Vorrichtung nach irgendeinem der Ansprüche 3 bis 7, bei der die Meßstrecken paarig sind,

dadurch gekennzeichnet,

daß sie eine Regeleinrichtung (38) umfaßt, die ermöglicht, die optoelektronische Ausbeute der Meßstrecken desselben Paars gleich zu machen.

9. Vorrichtung nach Anspruch 8,

dadurch gekennzeichnet,

daß die Regeleinrichtung (38) von einer Lichtquelle gebildet ist, die dieselbe Strahlung in jede Meßstrecke desselben Paars aussendet.

10. Vorrichtung nach irgendeinem der Ansprüche 3 bis 9,

dadurch gekennzeichnet,

daß die Verarbeitungseinrichtung (24) eine Normierungseinrichtung (44) für die von den Meßstrecken erhaltenen Signale, eine Aufzeichnungseinrichtung (46), die eine zurückgestellte Verarbeitung dieser Signale erlaubt, einen Bandpaßfilter (48), einen vorübergehenden Filter (50), einen Analog-Digital-Umvandler (56) und eine Recheneinheit (58) umfaßt.

## Claims

1. Process for the in line inspection of the depth of a weld carried out by a pulse beam in which, around its impact point on the part to be welded (4), the pulse beam produces a welding plasma (8), characterized in that for each welding beam pulse is collected at least one emission line of the welding plasma (8) in an optical means (11), that the energy of these lines is converted into analog electrical signals, that these signals are digitally processed and that the signals resulting from the digital processing are compared with reference signals.

2. Process according to claim 1, characterized in that by means of a control loop, the power of the in line welding pulse beam is controlled by a signal depending on the difference between the level of the signals resulting from the digital processing and the level of the reference signals.

3. Apparatus for the in line inspection of the depth of a weld by a pulse beam, in which the part to be welded (4) and the welding means (6) supplying a pulse beam are contained in a welding enclosure (2), characterized in that it comprises at least one measuring channel, each constituted by an optical means (11) for collecting the radiation emitted by the welding plasma (8), said optical means (11) being located in the welding enclosure (2), a monochromator (15) connected to the optical means (11) by a transmission means (14), a photomultiplier (20) connected to the monochromator (18) and incorporating, apart from the measuring channel, means (24) for processing the electrical signals from the photomultipliers (20) and means (30) for displaying the signals from the processing means and means (32) for comparing these signals with reference signals.

4. Apparatus according to claim 3, characterized in that it comprises an in line control loop constituted by a signal, supplied by an output (42) of the comparison means (32), controlling the intensity of the welding pulse beam.

5. Apparatus according to either of the claims 3 and 4, characterized in that each optical means (1) receives the end of an optical fibre (13).

6. Apparatus according to claims 3 or 4, characterized in that each optical means (11) comprises optical lenses and mirrors.

7. Apparatus according to either of the claims 5 and 6, characterized in that each optical means (11) also comprises a collimator (12).

8. Apparatus according to any one of the claims 3 to 7 in which the measuring channels are paired, characterized in that it comprises a control means (38) making it possible to render equal the optoelectronic efficiency of the measuring channels of one and the same pair.

9. Apparatus according to claim 8, characterized in that the control means (38) is constituted by a radiation source emitting the same radiation in each of the measuring channels of the same pair.

10. Apparatus according to any one of the claims 3 to 9, characterized in that the processing means (24) comprises means (44) for standardizing the signals received from the measuring channels, a recorder (46) permitting a delayed processing of these signals, a band-pass filter (48), a time filter (50), an analog - digital converter (56) and an arithmetic unit (58).

FIG. 1

FIG. 2

FIG. 3

FIG. 4

EP 0 112 762 B1